(19) Europäisches Patentamt
European Patent Office
Office européen des brevets

(11) Veröffentlichungsnummer: **0 299 317 A2**

(12) **EUROPÄISCHE PATENTANMELDUNG**

(21) Anmeldenummer: **88110627.2**

(51) Int. Cl.4: **C08F 26/06**

(22) Anmeldetag: **04.07.88**

(30) Priorität: **15.07.87 DE 3723308**

(43) Veröffentlichungstag der Anmeldung: **18.01.89 Patentblatt 89/03**

(84) Benannte Vertragsstaaten: **DE ES FR GB IT**

(71) Anmelder: **BAYER AG**
**Konzernverwaltung RP Patentabteilung**
**D-5090 Leverkusen 1 Bayerwerk(DE)**

(72) Erfinder: **Ohst, Holger, Dr.**
**Klutstein 33**
**D-5060 Bergisch Gladbach 2(DE)**
Erfinder: **Penners, Günther, Dr.**
**Koernerstrasse 6**
**D-5090 Leverkusen 1(DE)**
Erfinder: **Podszun, Wolfgang, Dr.**
**Wolfskaul 4**
**D-5000 Köln 80(DE)**

(54) **Wärmesensibilisierte Polymer-Dispersionen.**

(57) Es werden wärmesensibilisierte Polymer-Dispersionen beschrieben, die durch einen Gehalt an Homo- oder Copolymerisaten von N-Vinyllactamen gekennzeichnet sind.

EP 0 299 317 A2

Xerox Copy Centre

## Wärmesensibilisierte Polymer-Dispersionen

Die Erfindung betrifft wärmesensibilisierte Polymer-Dispersionen mit einem Gehalt an Homo- oder Copolymerisaten von N-Vinyllactamen.

Es ist bekannt, daß man Polymer-Dispersionen durch Zugabe von Sensibilisierungsmitteln unter Erwärmen koagulieren kann. Als Sensibilisierungsmittel können Polyvinylalkylether (DE-OS 15 69 119), wasserlösliche Polyacetale (DE-AS 10 66 734), oxalkylierte Polysiloxane (GB 1.206.036; DE-AS 12 43 394; DE-OS 20 05 974), Polyetherurethane (DE-OS 25 16 979; DE-OS 25 34 304); oxalkylierte Amine (DE-AS 22 26 269), quaternisierte Polyalkylenglykolether mehrwertiger Amine (DE-OS 31 14 091) und mit Polyharnstoff modifizierte Polyetherurethane (DE-OS 33 30 197) verwendet werden.

Die genannten Verbindungsklassen besitzen jedoch entscheidende Nachteile. Die nachteiligen Eigenschaften der Polyvinylalkylether, der wasserlöslichen Polyacetale, der oxalkylierten Polysiloxane der Polyetherurethane der Polyetherurethane der oxalkylierten Amine und der quaternisierten Polyalkylenglykolether von mehrwertigen Aminen sind in der DE-OS 33 30 197, Seiten 5 und 6, diskutiert. Diese DE-OS beschreibt mit Polyharnstoff modifizierte Polyurethane als Wärmesensibilisierungsmittel. Diese Produkte sind geeignet, Kautschuklatices mit nur geringen Einsatzmengen wärmesensibel einzustellen, bei denen andere Wärmesensibilisierungsmittel versagen. Die Anwendung der in der genannten DE-OS beschriebenen Sensibilisierungsmittel bleibt jedoch auf spezielle Latices beschränkt; weiterhin liegen die Koagulationstemperaturen, die diese Sensibilisierungsmittel bewirken, in einem engen, nicht wesentlich variierbaren Temperaturbereich, so daß auch diese Produkte nicht voll befriedigen können.

Es wurde nun gefunden, daß man eine Einstellung der Koagulationstemperatur in einem weiten Temperaturbereich erreichen kann, wenn man zur Wärmesensibilisierung von Polymer-Dispersionen Homo- oder Copolymerisate aus N-Vinyllactamen verwendet.

Die Erfindung betrifft daher wärmesensibilisierte Polymer-Dispersionen, die gekennzeichnet sind durch einen Gehalt an Homo- oder Copolymerisaten von N-Vinyllactamen der Formel

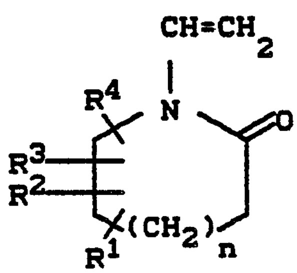

(I),

in der

n für die Zahl 0, 1 oder 2 steht und $R^1$, $R^2$, $R^3$ und $R^4$ unabhängig voneinander für Wasserstoff oder für $C_1$-$C_4$-Alkyl stehen.

$C_1$-$C_4$-Alkyl ist Methyl, Ethyl, Propyl, Isopropyl, Butyl oder Isobutyl, bevorzugt Methyl oder Ethyl, besonders bevorzugt Ethyl.

Durch die Variation von n = 0, 1 oder 2 werden 5-gliedrige, 6-gliedrige oder 7-gliedrige Lactam-Systeme bezeichnet.

In bevorzugter Weise seien N-Vinyllactame der Formel

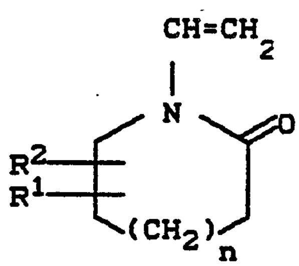

(II)

genannt, in der

n, $R^1$ und $R^2$ die obige Bedeutung haben.

In besonders bevorzugter Weise seien N-Vinyllactame der Formel

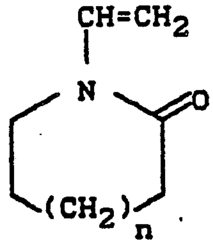

(III)

genannt, in der n die obige Bedeutung hat.

Beispiele für solche N-Vinyllactame sind: N-Vinylpyrrolidon, N-Vinyl-piperidon, N-Vinyl-caprolactam, N-Vinyl-5-methyl-2-pyrrolidon, N-Vinyl-3,3,5-trimethyl-2-pyrrolidon und N-Vinyl-3-methyl-2-pyrrolidon.

N-Vinyllactame der genannten Art sind dem Fachmann bekannt und können beispielsweise dadurch hergestellt werden, daß man die entsprechenden Lactame mit Acetylen umsetzt, wie zusammenfassens nachzulesen ist in Enc. Polym. Sci. Techn., Vol. 14, S. 240 f (1971).

Erfindungsgemäß können Homo- oder Copolymerisate der genannte N-Vinyllactame einsetzt werden. Copolymerisate für die Herstellung der erfindungsgemäßen wärmesensibilisierten Polymer-Dispersionen enthalten mindestens 80 Mol-% N-Vinyllactame der genannten Art. Weitere Comonomere für die Copolymerisate von N-Vinyllactamen sind ethylenisch ungesättigte Monomere, die mit N-Vinyllactamen copolymerisieren können, beispielsweise Butadien, Isopren, Chloropren, Styrol, α-Methylstyrol, p-Methylstyrol, Vinylhalogenide, wie Vinylchlorid, Vinylidenchlorid oder Vinylidenfluorid, Vinylester, wie Vinylacetat, Vinylpropionat oder Vinylstearat, Vinyl methylketon, Acrylsäure, Methacrylsäure, Maleinsäureanhydrid, Acrylsäureester oder Methacrylsäureester, wie Methylacrylat, Methylmethacrylat, Ethylacrylat, Ethylmethacrylat, Propylacrylat, Laurylacrylat, Laurylmethacrylat, Decylacrylat, N,N-Dimethylamino-ethylmethacrylat, 2-Hydroxyethylmethacrylat, 2-Hydroxypropylmethacrylat oder Glycidylmethacrylat, Amide und Nitrile, wie Acrylamid, Methacrylamid, N-Methylolacrylamid, Acrylnitril, Methacrylnitril oder N-substituierte Maleinimide, Ether, wie Vinylbutylether, Vinylisobutylether oder Vinylphenylether. Geeignet sind auch Mischungen dieser Comonomeren. Besonders geeignete Comonomere sind Acrylnitril und Vinylester.

Die genannten Comonomeren oder ihre Gemische können in einer Menge von 0-20 Mol-%, bezogen auf die Gesamtmonomermenge, in den Copolymerisaten von N-Vinyllactamen enthalten sein.

Es ist ebenso möglich, ein Gemisch der N-Vinyllactame der Formel (I) zu erfindungsgemäß einsetzbaren Copolymerisaten zu polymerisieren. Zu einem solchen Gemisch von N-Vinyllactamen der Formel (I), die sodann wiederum mindestens 80 Mol-% aller einpolymerisierten Monomereinheiten darstellen, können die genannten weiteren Comonomeren in der ebenfalls genannten Menge von 0-20 Mol-%, bezogen auf die Gesamtmenge der Monomereinheiten, treten. Hierbei sind Homo- oder Copolymerisate bevorzugt, die 0-90 Mol-% N-Vinyl-pyrrolidon und 10-100 Mol-% N-Vinyl-caprolactam als Comonomere enthalten. In einer ganz besonders bevorzugten Weise werden Mischungen mehrerer N-Vinyllactame der Formel (I) ohne weitere Comonomere copolymerisiert.

Erfindungsgemäß einsetzbare Homo- oder Copolymerisate von N-Vinyllactamen der beschriebenen Art haben eine mittlere Molmasse von 15 000-150 000 g pro Mol, bevorzugt 20 000-100 000 g pro Mol. Zur Herstellung der beschriebenen Homo- oder Copolymerisate geht man so vor, daß man beispielsweise eine Lösung eines Monomerengemisches aus N-Vinylpyrrolidon und N-Vinylcaprolactam (1:1) in tert. Butanol bei einer Gesamtmonomerkonzentration von 1 mol pro Liter durch Zugabe von 2,4 Mol-% Azobisisobutyronitril als Radikal-Starter bei 70 °C im Batch-Verfahren zur Polymerisation bringt und die Homo- oder Copolymerisate durch Zugabe von Hexan nach beendeter Reaktion ausfällt und isoliert.

Weitere Herstellungsmöglichkeiten erfindungsgemäß einsetzbarer Homo- oder Copolymerisate sind gegeben analog zu J.Appl. Polym. Sci. 12, 1843 (1968); Vysokomolekul. Soedin. 6, 1585 (1964), Vysokomolekul, Soedin, 6, 1810 (1964), sowie z.B. JA 50-140 594, EP O 074 191.

Die erfindungsgemäßen wärmesensibilisierten Polymer-Dispersionen können synthetische anionische oder nichtionische wäßrige Polymer-Dispersionen oder natürliche Polymer-Dispersionen, wie Naturkautschuk-Latices, enthalten. Synthetische wäßrige Polymer-Dispersionen können beispielsweise durch dem Fachmann bekannte Emulsionspolymerisation mit Hilfe von Radikalinitiatoren hergestellt werden. Olefinisch ungesättigte Verbindungen für eine solche Emulsionspolymerisation sind beispielsweise Ethylen, Butadien, Isopren, Styrol, α-Methylstyrol, Divinylbenzol, Acrylnitril, Methacrylnitril, Acrylsäure, Methacrylsäure, 2-Chlorbutadien-1,3, Ester der Acrylsäure und Methacrylsäure mit $C_1$-$C_8$-Alkoholen oder mit Polyolen,

Acrylamid, Methacrylamid, N-Methylol(meth)acrylamid, (Meth)acrylamido-N-methylol-methylether, Itaconsäure, Maleinsäure, Fumarsäure, Diester und Halbester ungesättigter Dicarbonsäuren, Vinylchlorid, Vinylacetat, Vinylidenchlorid, die allein oder in Kombination miteinander eingesetzt werden können. Bevorzugte olefinisch ungesättigte Verbindungen für die Emulsionspolymerisation sind Ethylen, Butadien, Styrol, Acrylnitril und Acrylsäure oder deren Ester. Besonders bevorzugt sind Emulsionspolymerisate, die einpolymerisiertes Styrol enthalten.

Die Emulsionspolymerisation kann mit Radikalbildnern, vorzugsweise mit organischen Peroxid-Verbindungen oder Azo-Verbindungen ausgelöst werden, die in Mengen von 0,01-2 Gew.-%, bezogen auf die Monomeren, eingesetzt werden. In Abhängigkeit von der Monomerkombination und zur gegebenenfalls gewünschten Erniedrigung des Molekulargewichts des Emulsionspolymerisats können geringe Mengen an Reglern mitverwendet werden, beispielsweise Mercaptane oder Halogenkohlenwasserstoffe. Die Emulsionspolymerisation ist auf unterschiedlichen Wegen durchführbar: Man kann beispielsweise die Gesamtmenge der Monomeren und den größten Teil der die Emulgatoren enthaltenden wäßrigen Phase vorlegen, die Polymerisation durch Zugabe des Initiators starten und im Verlauf der Polymerisation den Rest der wäßrigen Phase kontinuierlich oder absatzweise zugeben. Man kann auch die Technik des sogenannten "Monomerzulaufs" benutzen, wobei nur ein Teil der Monomeren und der das Emulgiermittel enthaltenden wäßrigen Phase vorgelegt und nach Starten der Polymerisation der Rest der Monomeren und der Rest der wäßrigen Phase gleichmäßig oder absatzweise nach Maßgabe des Umsatzes zugefügt wird. Der zudosierte Monomeranteil kann in der wäßrigen Phase voremulgiert sein. Die Teilchengröße der Polymer-Dispersionen liegt im Bereich von 30 nm-1 µm; die Feststoffgehalte betragen 1-70 Gew.-%, bezogen auf das Gesamtgewicht der Dispersion, und sind für die erfindungsgemäßen wärmesensibilisierten Polymer-Dispersionen unkritisch. In bevorzugter Weise werden jedoch Polymer-Dispersionen mit einem Feststoffgehalt von 5-60 Gew.-% eingesetzt.

Die Polymer-Dispersionen können die üblichen anionischen und nichtionischen Emulgiermittel und gegebenenfalls übliche Schutzkolloide enthalten. Beispiele hierfür sind Alkylsulfate, wie Laurylsulfat, Alkalisalze von Fettsäuren, wie Natriumstearat oder Kaliumoleat, Alkalisulfonate, oxethylierte Alkylphenole mit 8-12 C-Atome enthaltenden Alkylgruppen, die 5-30, insbesondere 10-25 Ethylenoxidreste aufweisen und deren Sulfurierungsprodukte, sowie oxalkylierte, insbesondere oxethylierte Fettalkohole, Fettamine und Fettsäuren, ferner Polyvinylakohol, teilverseifte Vinylacetat-Polymerisate, Carboxymethyl-Cellulose und Hydroxyethyl-Cellulose. Der Gehalt der Polymer-Dispersionen an Emulgatoren liegt im allgemeinen bei 0,1-5, bevorzugt 1-3 Gew.-%, bezogen auf die Polymerisatmenge.

Die erfindungsgemäßen wärmesensibilisierten Polymer-Dispersionen können weiterhin Zusatzstoffe enthalten, beispielsweise Farbstoffe, Pigmente, Füllstoffe, Verdicker, Elektrolyte, Alterungsschutzmittel, wasserlösliche Harze oder Vulkanisationschemikalien.

Zur Bildung der erfindungsgemäßen wärmesensibilisierten Polymer-Dispersionen werden die genannten N-Vinyllactam-Homo- oder Copolymerisate in Mengen von 1-20 Gew.-%, bevorzugt 2-15 Gew.-%, bezogen auf den Feststoffanteil der Polymer-Dispersionen zugegeben. Hierbei kann die Zugabe der Homo- oder Copolymerisate in reiner Form oder häufig vorteilhafter als wäßrige Lösung erfolgen. In vielen Fällen erweist es sich als günstig, die wärmesensibilisierende Wirkung der Homo- oder Copolymerisate von N-Vinyllactamen durch Zusatz von Elektrolyten zu unterstützen. Geeignete Elektrolyte sind beispielsweise Natriumchlorid, Kaliumchlorid, Ammoniumchlorid, Natriumacetat, Kaliumacetat, Ammoniumacetat, Calciumchlorid und Natriumsulfat, von denen 0,1-10 Gew.-%, bezogen auf den Feststoffanteil der Polymer-Dispersion, eingesetzt werden.

Die erfindungsgemäßen wärmesensibilisierten Polymer-Dispersionen können durch Variation der Copolymerisat-Zusammensetzung von N-Vinyllactamen Koagulationstemperaturen von 20-80 °C in beliebiger Einstellung aufweisen.

Hierbei wird beispielsweise bei Einsatz eines N-Vinylcaprolactam-N-Vinylpyrrolidon-Copolymerisates eine umso niedrigere Koagulationstemperatur erreicht, je höher der Anteil an N-Vinylcaprolactam im Copolymerisat ist.

Unterhalb der eingestellten Koagulationstemperatur sind die erfindungsgemäß wärmesensibilisierten Polymer-Dispersionen auch bei längerer Lagerung stabil und zeigen keine Koagulatbildung. Weiterhin können zur Herstellung sowohl saure, als auch neutrale und basische wäßrige Polymer-Dispersionen erfindungsgemäß wärmesensibilisiert werden. Als pH-Bereich seien beispielsweise die Werte von 3 bis 11 genannt. Die der Wärmesensibilisierung zu unterwerfenden Polymer-Dispersionen können bei Anwendung der beschriebenen Homo- oder Copolymerisate von N-Vinyllactamen sich in einem weiten Bereich in der Zusammensetzung unterschiedlicher Polymer-Dispersionen befinden, ferner die genannten großen Bereiche an Füllstoffen und sonstigen Zusatzstoffe enthalten.

Hervorzuheben sind hierbei solche Polymer-Dispersionen, die einpolymerisiertes Styrol enthalten, für

diese ist eine erfindungsgemäße Verwendung der N-Vinyllactam-Copolymerisate ganz besonders geeignet.

## Beispiele

### Beispiel 1

Herstellung von N-Vinylpyrrolidon/N-Vinylcaprolactam-Copolymerisaten

Allgemeine Vorschrift: In einem Rührkolben mit Rührer, Thermometer und Rückflußkühler wurden unter Stickstoff als Schutzgas N-Vinylpyrrolidon ($M_1$) und N-Vinylcaprolactam ($M_2$) in einer Gesamtmenge von 0,25 Mol sowie 230 g tert.-Butanol und 1,0 g Azo-di-isobutyronitril vorgelegt. Das molare Verhältnis der beiden Monomeren ist in Tabelle 1 angegeben. Die Reaktionsmischung wurde auf 70 °C aufgeheizt. Nach einer Polymerisationsdauer von 16 Stunden wurde eine Destillation unter vermindertem Druck zur Befreiung der Reaktionslösung von Monomeren angeschlossen. Der Rückstand wurde mit Hexan gewaschen und anschließend bei 50 °C getrocknet.

Tab. 1

Darstellung und Charakterisierung von Homo- und Copolymerisaten aus N-Vinylpyrrolidon ($M_1$) und N-Vinylcaprolactam ($M_2$)

| Beispiel | Monomerzusammensetzung $M_1$ : $M_2$ | Umsatz | [η] dl/g (1 %ige Lsg. in Methanol, 30 °C) | Trübungstemperatur* |
|---|---|---|---|---|
| 1a | 100 : 0 | 83 % | 0,27 | tritt bis 100 °C nicht auf |
| 1b | 75 : 25 | 79 % | 0,29 | 94 °C |
| 1c | 70 : 30 | 86 % | 0,24 | 85 °C |
| 1d | 60 : 40 | 78 % | 0,27 | 74 °C |
| 1e | 50 : 50 | 74 % | 0,25 | 58 °C |
| 1f | 25 : 75 | 68 % | 0,31 | 44 °C |
| 1g | 0 : 100 | 62 % | 0,32 | 32 °C |

*) Bestimmt durch langsames Aufheizen einer 2 %igen wäßrigen Lösung und Beobachten des ersten Auftretens einer Trübung.

### Beispiel 2

Herstellung von N-Vinylpyrrolidon/N-Vinylcaprolactam-Copolymerisaten mit unterschiedlichem Molekulargewicht

Entsprechend der in Beispiel 1 angegebenen Arbeitsweise wurden 13,9 g N-Vinylpyrrolidon (0,125 Mol) und 17,4 g N-Vinylcaprolactam (0,125 Mol) in 300 ml tert. Butanol 16 Stunden bei 70 °C polymerisiert. Dabei wurde das Mol-Gew. (ausgedrückt durch den bei 25 °C in THF bestimmten Staudinger-Index [η]) durch Veränderung der Initiatorkonzentration bzw. durch Zusatz von Dodecylmercaptan als Regler eingestellt.

Tab. 2

| Copolymerisate aus N-Vinylpyrrolidon und N-Vinylcaprolactam mit unterschiedlichem Molekulargewicht ([η]) | | | |
|---|---|---|---|
| Beispiel | Azo-di-isobutyronitril | Dodecylmercaptan | [η] dl/g (25 °C in THF) |
| 2a | 0,1 g | - | 0,528 |
| 2b | 0,5 g | - | 0,332 |
| 2c | 1 g | - | 0,251 |
| 2d | 1 g | 0,2 g | 0,190 |

Beispiel 3

Terpolymerisate aus N-Vinylpyrrolidon, N-Vinylcaprolactam und Vinylacetat

Entsprechend der in Beispiel 1 angegebenen Arbeitsweise wurden die unten angegebenen Monomeren in 300 ml tert. Butanol unter Zusatz von 1 g Azo-di-isobutyronitril 16 Stunden bei 70 °C polymerisiert. Die erhaltenen Polymerisate wurden durch zweimaliges Ausfällen aus tert. Butanol mit Hexan gereinigt.

Tab. 3

| Terpolymerisate aus N-Vinylpyrrolidon (VP), N-Vinylcaprolactam (VCL) und Vinylacetat (VA) | | | | | |
|---|---|---|---|---|---|
| Beispiel Nr. | VP | VCL | VA | [η] dl/g in THF | Acetylgehalt |
| 3a | 13,7 g | 17,2 g | 0,4 g | 0,21 | 1,3 % |
| 3b | 13,4 g | 16,8 g | 1,1 g | 0,21 | 1,7 % |
| 3c | 12,9 g | 16,2 g | 2,2 g | 0,22 | 3,4 % |

Beispiel 4

250 Teile einer 8 gew.-%igen emulgatorfreien wäßrigen Polystyrol-Dispersion wurden mit 770 Gew.-Teilen destillierten Wassers und 28 Gew.-Teilen einer 5 gew.%igen Lösung des in der Tabelle 4 genannten Wärmesensibilisierungsmittels vermischt. Nach 15 Minuten wurden 50 Gew.-Teile 1,0 M $CaCl_2$-Lösung zugegeben und der Koagulationspunkt der Mischung bestimmt.

Methode zur Ermittlung des Koagulationspunktes: 10 g der wärmesensibel eingestellten Mischung wurden in einem Glasröhrchen eingewogen und in ein Wasserbad gebracht. Die Temperatur des Wasserbades wurde unter gleichmäßigen Rühren mit einer Geschwindigkeit von 5 °C/Minute erhöht und das Koagulierverhalten der Polymer-Dispersion in Abhängigkeit von der Temperatur verfolgt. Als Koagulationspunkt wurde die Temperatur angegeben, bei der das Polymerisat sich vollständig und endgültig als Flocken vom Serum abgetrennt hatte.

Tab. 4

| Koagulationspunkte einer mit unterschiedlichen Copolymerisaten wärmesensibel eingestellten Polystyrol-Dispersion | | |
|---|---|---|
| Beispiel | Wärmesensibilisierungsmittel gemäß Beispiel | Koagulationspunkt (°C) |
| 4a | 1b | 79 |
| 4b | 1d | 65 |
| 4c | 1e | 59 |
| 4d | 1f | 42 |
| 4e | 1g | 36 |

Beispiel 5

Zu 40 Teilen einer 50 gew.-%igen wäßrigen Polymer-Dispersion eines Copolymerisates aus 35 Teilen Acrylnitril, 61 Teilen Butadien und 4 Teilen Methacrylsäure, die 3 Teile eines handelsüblichen Alkylsulfonats (eine Mischung aus Tetradecan-bis-hexadecansulfonaten) als Emulgator enthielten, gab man 894 Teile destilliertes Wasser, 16 Teile einer 5 gew.-%igen Lösung des Sensibilisierungsmittels gemäß Beispiel 1e und 50 Teile einer 1,0 M $CaCl_2$-Lösung. Der Koagulationspunkt der Mischung betrug 50° C.

Beispiel 6

Zu 40 Teilen einer 50 gew.-%igen Polymer-Dispersion eines Copolymerisates aus 43 Teilen Butadien, 55 Teilen Styrol und 2 Teilen Acrylsäure, die 1,5 Teile eines handelsüblichen Alkylsulfonats (Dodecylbenzolsulfonat) als Emulgator enthielten, gab man 886 Teile destilliertes Wasser, 24 Teile einer 5 gew.-%igen Lösung des Sensibilisierungsmittels gemäß Beispiel 1e und 50 Teile einer 1,0 M $CaCl_2$-Lösung. Der Koagulationspunkt der Mischung betrug 48° C.

Beispiel 7

Zu 40 Teilen einer 50 gew.-%igen Polymer-Dispersion eines Copolymerisates aus 33 Teilen Butadien, 61 Teilen Styrol, 4 Teilen Acrylsäure und 2 Teilen Acrylamid, die 0,5 Teile eines handelsüblichen Alkylsulfats (Na-Laurylsulfat) als Emulgator enthielten, gab man 894 Teile destilliertes Wasser, 16 Teile einer 5 gew.-%igen Lösung des Sensibilisierungsmittels gemäß Beispiel 1e und 50 Teile einer 1,0 M $CaCl_2$-Lösung. Der Koagulationspunkt der Mischung betrug 52° C.

Beispiel 8

Zu 40 Teilen einer 50 gew.-%igen Polymer-Dispersion eines Copolymerisates aus 36 Teilen Butadien, 60 Teilen Styrol und 4 Teilen Acrylsäure, die 0,5 Teile eines handelsüblichen Alkylsulfats (Na-Laurylsulfat) als Emulgator enthielten, gab man 890 Teile destilliertes Wasser, 20 Teile einer 5 gew.-%igen Lösung des Sensibilisierungsmittels gemäß Beispiel 1e und 50 Teile einer 1,0 M $CaCl_2$-Lösung. Der Koagulationspunkt der Mischung betrug 56° C.

Beispiel 9

500 Teile der Polymer-Dispersion gemäß Beispiel 5 wurden mit 250 Teilen einer 5 gew.-%igen Lösung des Sensibilisierungsmittels gemäß Beispiel 1e und 200 Teilen destillierten Wassers vermischt. Die Mischung wurde durch Zugabe von 1,0 M NaOH bzw. HCl auf den gewünschten pH-Wert eingestellt und schließlich mit 50 Teilen 1,0 M $CaCl_2$-Lösung mit gleichem pH-Wert versetzt. Der Koagulationspunkt wurde gemäß Beispiel 4 bestimmt. Als Koagulationspunkt wurde die Temperatur angegeben, bei der das Polymerisat sich vollständig und endgültig als Klumpen vom Serum abtrennt.

Tab. 5

| Koagulationspunkte einer wärmesensibel eingestellten Polymer-Dispersion mit unterschiedlichem pH-Wert | | |
|---|---|---|
| Beispiel | pH | Koagulationspunkt (°C) |
| 9a | 4,0 | 48 |
| 9b | 6,5 | 54 |
| 9c | 8,0 | 50 |

Beispiel 10

500 Teile der Polymer-Dispersion gemäß Beispiel 6 wurden mit 250 Teilen einer 5 gew.-%igen Lösung des Sensibilisierungsmittels gemäß Beispiel 1e, 200 Teilen destillierten Wassers und 50 Teilen 1,0 M $CaCl_2$-Lösung vermischt. Der pH-Wert der Mischung betrug 8,5, der Koagulationspunkt gemäß Beispiel 7 58°C.

## Ansprüche

1. Wärmesensibilisierte Polymer-Dispersionen, gekennzeichnet durch einen Gehalt an Homo- oder Copolymerisaten von N-Vinyllactamen der Formel

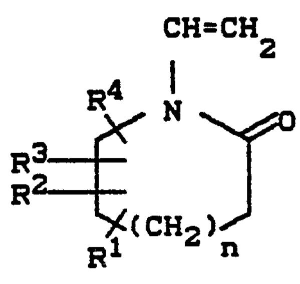

,

in der
n für die Zahl 0, 1 oder 2 steht und
$R^1$, $R^2$, $R^3$ und $R^4$ unabhängig voneinander für Wasserstoff oder für $C_1$-$C_4$-Alkyl stehen.

2. Wärmesensibilisierte Polymer-Dispersionen nach Anspruch 1, dadurch gekennzeichnet, daß die Copolymerisate mindestens 80 Mol-% N-Vinyllactame als Monomereinheiten enthalten.

3. Wärmesensibilisierte Polymer-Dispersionen nach Anspruch 2, dadurch gekennzeichnet, daß die Copolymerisate 0-20 Mol-% Acrylnitril und/oder Vinylester enthalten.

4. Wärmesensibilisierte Polymer-Dispersionen nach Anspruch 2, dadurch gekennzeichnet, daß die Homo-oder Copolymerisate aus 0-90 Mol-% N-Vinylpyrrolidon und 10-100 Mol-% N-Vinyl-caprolactam bestehen.

5. Wärmesensibilisierte Polymer-Dispersionen nach Anspruch 1, dadurch gekennzeichnet, daß sie 1-20 Gew.-% Homo- oder Copolymerisat, bezogen auf den Feststoffanteil der Polymer-Dispersion, enthalten.

6. Wärmesensibilisierte Polymer-Dispersionen nach Anspruch 1, dadurch gekennzeichnet, daß sie Polymer-Dispersionen mit einpolymerisiertem Styrol enthalten.

7. Wärmesensibilisierte Polymer-Dispersionen nach Anspruch 1, gekennzeichnet durch einen zusätzlichen Gehalt an Elektrolyten.